# NEUE EUROPÄISCHE PATENTSCHRIFT

(11) **EP 3 548 280 B2**
(45) Veröffentlichungstag und Bekanntmachung des Hinweises auf die Entscheidung über den Einspruch: **15.07.2026**
(45) Hinweis auf die Patenterteilung: 16.08.2023
(21) Anmeldenummer: 17801616.8
(22) Anmeldetag: 02.11.2017
(51) Int. Cl.: B32B 25/04, B32B 25/08, B32B 27/30, B32B 1/08, B32B 27/18, B32B 27/26, F16L 11/04

(54) **MEHRSCHICHTIGER FLEXIBLER SCHLAUCH**
MULTI-LAYER FLEXIBLE HOSE
TUYAU FLEXIBLE MULTICOUCHES

(30) Priorität: 29.11.2016 DE 102016223618
(43) Veröffentlichungstag der Anmeldung: 09.10.2019
(73) Patentinhaber: ContiTech Deutschland GmbH, 30175 Hannover (DE)
(72) Erfinder: ONKEN, Kristian, 34131 Kassel (DE)
(74) Vertreter: Meissner Bolte Partnerschaft mbB
(86) Internationale Anmeldenummer: PCT/EP2017/077989
(87) Internationale Veröffentlichungsnummer: WO 2018/099678

(56) Entgegenhaltungen:
- EP-A1- 1 096 190
- EP-A1- 1 568 484
- US-A1- 2012 199 238

## Beschreibung

Die Erfindung betrifft einen mehrschichtigen flexiblen Trinkwasserschlauch oder Lebensmittelschlauch.

Elastomerschläuche im Trinkwasserbereich unterliegen in Deutschland strengen gesetzlichen Vorgaben. So sollen z.B. keine organischen Verbindungen aus der Elastomermischung in das Medium übergehen und es darf keine geruch- oder geschmackliche Veränderung des Mediums erfolgen.

Hierzu werden häufig Fluorpolymere bzw. Kautschukmischungen auf Basis von Flourpolymeren verwendet. Dabei kann das Fluorpolymer ein Fluorkunststoff oder ein Fluorelastomer sein, welches mit einem nicht fluoriertem Elastomer verbunden wird.

Das Fluorpolymer bzw. die Fluorpolymermischung besticht dabei durch seine Chemikalien- und Temperatubeständigkeit sowie seiner guten Barrierewirkung, die dahinterliegende Elastomermischung sorgt für die entsprechende Flexibilität. In der Regel ist die Fluorpolymerschicht gegenüber der Elastomerschicht dünner.

Je nach Verwendungszweck und Art des Gegenstandes kann auch eine zusätzliche Elastomerschicht vor die Fluorpolymerschicht aufgebracht werden, so dass die Fluorpolymerschicht zwischen den Elastomerschichten eingebettet ist. Häufig wird dieser Aufbau gewählt, wenn die Fluorpolymerschicht als Barriereschicht (Sperrschicht) wirken soll. Zusätzlich kann die Schlauchkonstruktion durch eine oder mehrere Verstärkungsschicht(en), d.h. Festigkeitsträgerschicht z.B. aus Stahlgeflecht oder synthetischem Garn oder Gewebe, und einem weiteren Außengummi als Schutzschicht aufgebaut sein.

Nachteilig an diesem Aufbau ist, dass Fluorpolymere in der Regel keine oder wenn überhaupt nur geringe Haftung zu einer nicht fluorierten Elastomermischung aufweisen.

Dieses ist auf die anti-adhäsive Eigenschaften der Fluorpolymere, dem so genannten Teflon-Effekt, zurückzuführen. Daher muss entweder die Fluorpolymeroberfläche mit physikalischen Mitteln, z.B. durch Plasmaätzung, siehe DE69930696A1, oder mit chemischen Mitteln, z.B. durch Natrium-Ammoniak- oder Natrium-Naphthalin-Ätzung, siehe DE102008014988A1, vorbehandelt werden. Diese Methoden sind aufwendig, kostenintensiv und meist unpraktikabel, jedoch bei hoch- bzw. vollfluorierten Polymeren, wie z.B. PTFE, FEP, PFA, MFA, unvermeidlich.

Bei teilfluorierten Fluorpolymeren wie z.B. PVF, PVDF, THV, ETFE, ECTFE, aber auch bestimmten Fluorelastomeren wie FKM, ist es jedoch möglich, durch Zugabe von bestimmten haftvermittelnden Chemikalien, im weiteren "Haftvermittler" genannt, in die Elastomermischung, eine ausreichende Haftung zwischen Fluorpolymer und Elastomer zu erreichen.

Als Haftvermittler wurden einige Verbindungen beschrieben, u.a. primäre Amine, siehe DE69506904T2, aminosubstituierte Organosilanverbindungen, siehe DE60211160T2, und Cyanacrylat/Epoxid-Verbindungen, siehe US5679425. Nachteilig an diesen Verbindungen ist, dass sie teilweise nicht kompatibel mit jedem Elastomer sind, nicht sehr einfach handhabbar sind, toxikologisch nicht ganz unbedenklich sind und teilweise auch nur mittelmäßige Haftwerte zwischen Fluorpolymer und Elastomer aufweisen.

Zudem ist bekannt, dass zur Haftungsoptimierung das Fluorpolymer oberflächlich modifiziert bzw. gepropft sein kann, siehe EP1537989B1 oder US6143415. Nachteilig daran ist, dass die Fluorpolymere durch den zusätzlichen Herstellprozeß teurer werden, ihre physikalischen Eigenschaften verändert werden und sie möglicherweise bestimmte Zulassungen im Lebensmittel oder Trinkwasserbereich verlieren.

Auch beschrieben ist die zusätzliche Einfügung einer gering fluorierten Fluorpolymerschicht mit niedrigerem Schmelzpunkt zwischen Fluorpolymer und Elastomer, welche die Lagenhaftung verbessern soll, siehe EP1497112B2. Nachteilig an dieser Methode ist, dass eine zusätzliche Schicht eingefügt werden muss, wass die Herstellung erschwert, die Kosten erhöht und der Flexibilität entgegenwirkt.

Es wurde daher zunächst nach einem möglichst ungiftigen, kostengünstigen, leicht verarbeitbaren Haftvermittler gesucht, der sich direkt in eine vernetzbare Kautschukmischung einarbeiten lässt und der nach der Vulkanisation im Endprodukt eine ideale Haftung zwischen der Fluorpolymermischung und Elastomermischung ergibt, d.h. eine nur unter Riss einer Komponente trennbare Verbindung, die nicht delaminierbar ist.

In DE10322026A1 werden hierzu Phosphoniumsalze wie z.B. Tetrabutylphosphoniumbenzotriazolat beschrieben. Aber auch die Verwendung von Allyltributylphosphoniumchlorid ist möglich. Die Salze weisen eine gute Haftung zu den meisten Fluorpolymeren auf, d.h. sie sind nur mit hoher Kraft delaminierbar, jedoch sinkt die Haftkraft insbesondere bei höherfluorierten Fluorpolymeren deutlich und eine Delaminierung, insbesondere unter Wärmeeinwirkung, ist möglich. In DE19980666T1 wird eine Haftungsoptimierung durch Zugabe von SbO₃ zum Phosphoniumsalz beschrieben. Nachteilig daran ist, dass SbO₃ toxikologisch kritisch anzusehen ist und auch aus Umweltgründen nicht mehr in Elastomermischungen verwendet werden sollte.

Eine andere Gruppe von effektiven Haftvermittlern sind bizyklische Amidine wie 1,8-Diazabicyclo[5.4.0]undec-7-en (DBU) und 1,5-Diazabicyclo[4.3.0]non-5-en (DBN) sowie deren Salze. DBU und DBN sind stark basische Flüssigkeiten, welche bei der Kautschukverarbeitung nicht einfach zu händeln sind. Daher werden die entsprechenden Salze der Verbindung bevorzugt.

Die Haftung zu einem Fluor-Chlor-Polymer (CPT) mittels DBU-Salz oder DBN-Salz oder einer Mischung der beiden wird in US20120199238 beschrieben. Als geeignete DBU-Salze und DBN-Salze werden darin genannt: DBU-Naphthoat oder DBU-Sorbat oder DBU-Phenol-Harz, DBN-Naphthoat oder DBN-Sorbat oder DBN-Phenol-Harz.

Das im CPT enthaltende Chlor spaltet sich bei der Reaktion leichter ab als der Fluor, wodurch eine schnellere und ggf. bessere Haftung erzielt werden kann.

In EP 1 096 190 A1 wird ein Kraftstoffschlauch beschrieben, der eine Innenschicht aus FKM-Kautschuk und eine Außenschicht aus einem NBR-PVC-Blend aufweist, die durch Vulkanisation verbunden werden. In dem NBR-PVC-Blend werden eine Carbonsäure und DBU-Salz eingemischt.

In US20060127619A1 und DE602005005270T2 wird beschrieben, dass bei einem Fluorpolymer mit hohem Fluoranteil nur die Kombination eines Phosphoniumsalzes mit einem DBU-Salz oder DBN-Salz eine ideale Haftung ergibt. Die alleinige Verwendung des Phosphoniumsalzes zeigt keine ausreichende Haftung.

Nachteilig daran ist somit, dass insbesondere bei höherfluorierten Polymeren häufig zwei oder mehr Haftvermittler in die Kautschukmischung eingemischt werden müssen, um eine ausreichende Festigkeit zu erzielen.

Die Aufgabe der vorliegenden Erfindung ist es daher, einen mehrschichtigen flexiblen Trinkwasserschlauch oder Lebensmittelschlauch bereitzustellen, der eine Schicht aus einem Fluorpolymer und eine Kautschukschicht aufweist, die sich in direktem Kontakt zueinander befinden und sich durch eine gute Haftung insbesondere zu höherfluorierten Fluorpolymeren auszeichnet, die neben Fluor keine weiteren Halogene enthalten. Der Aufwand bei der Herstellung des Schlauches soll nicht erhöht werden.

Als höherfluoriert werden gemäß der vorliegenden Erfindung Fluorpolymere bezeichnet, bei denen mehr als 50% der Atome an der Polymerkette, sowohl Haupt- als auch Nebenkette, Fluoratome sind.

Als niedrigfluoriert werden gemäß der vorliegenden Erfindung Fluorpolymere bezeichnet, bei denen weniger als 50% der Atome an der Polymerkette, sowohl Haupt- als auch Nebenkette, Fluoratome sind.

Gelöst wird diese Aufgabe durch einen mehrschichtigen flexiblen Trinkwasserschlauch oder Lebensmittelschlauch gemäß Anspruch 1.

überraschenderweise hat sich gezeigt, dass ein mehrschichtiger flexibler Trinkwasserschlauch oder Lebensmittelschlauch, die oben genannten Anforderungen wenn ein derartiges Haftvermittlersystem in Kombination mit den beschriebenen Vernetzungssystemen in der Kautschukschicht eingesetzt wird. Bevorzugt ohne Zugabe eines weiteren Haftvermittlers. Bei vergleichsweise geringer Konzentration des Haftvermittlersystems in der Kautschukschicht II ergibt sich nach der Vulkanisation eine ideale Haftung zu der Fluorkunststoffschicht I.

Überraschenderweise hat sich gezeigt, dass ein flexibler Schlauch, insbesondere ein Trinkwasserschlauch, die oben genannten Anforderungen erfüllt, wenn ein derartiges Haftvermittlersystem in Kombination mit den beschriebenen Vernetzungssystemen in der Kautschukschicht eingesetzt wird. Bevorzugt ohne Zugabe eines weiteren Haftvermittlers. Bei vergleichsweise geringer Konzentration des Haftvermittlersystems in der Kautschukschicht II ergibt sich nach der Vulkanisation eine ideale Haftung zu der Fluorkunststoffschicht I. Gleichzeitig ist ein derartiger Schlauch für den Lebensmittel- und Trinwasserbereich verwendbar.

Die Schicht I ist erfindungsgemäß aus wenigstens einem Fluorkunststoff aufgebaut. Hierbei kann es sich um wenigstens einen Fluorkunststoff handeln, der bevorzugt ausgewählt ist aus der Gruppe enthaltend EFEP und /oder F-TPV und /oder PCTFE und / oder und / oder CPT und / oder THV und / oder PVF und / oder PVDF und / oder ETFE und / oder ECTFE und / oder FEP und / oder PTFE und / oder PFA und / oder MFA. Die genannten Fluorkunststoffe können alleine oder in Kombination verwendet werden. In einer ganz besonders bevorzugten Ausführungsform handelt es sich um PVDF und / oder THV und / oder ETFE.

Die Schicht I kann noch weitere Zusatzstoffe enthalten, die der fachkundigen Person aus der Kautschukmischungstechnologie bekannt sind. Bevorzugt ist die Schicht I frei von Haftvermittlern, d.h. die Menge an Haftvermittlern betragt 0 phr. Die Schicht I bildet die Innenschicht des Schlauches und steht somit in direktem Kontakt zu dem zu transportierenden Lebensmittel und Trinkwasser. Wie bereits oben erwähnt, ist daher die Verwendung eines Haftvermittlers häufig nicht möglich.

Die Schicht II ist aus wenigstens einem Kautschuk aufgebaut. Hierbei handelt es sich um einen Kautschuk, der bevorzugt ausgewählt ist aus der Gruppe bestehend aus Ethylen-Propylen-Mischpolymerisat (EPM) und Ethylen-Propylen-Dien-Mischpolymerisat (EPDM) und / oder Nitrilkautschuk (NBR) und (teil)hydrierter Nitrilkautschuk (HNBR) und Polyblend aus Nitrilkautschuk mit Polyvinylchlorid (NBR/PVC) und FluorKautschuk (FKM) und Chloropren-Kautschuk (CR) und Naturkautschuk (NR) und Styrol-Butadien-Kautschuk (SBR) und lösungspolymerisiertem Styrol-Butadien-Kautschuk (SSBR) und emulsionspolymerisiertem Styrol-Butadien-Kautschuk (ESBR) und Isopren-Kautschuk (IR) und Butylkautschuk (IIR) und Brombutylkautschuk (BIIR) und Chlorbutylkautschuk (CIIR) und Butadien-Kautschuk (BR) und Chloriertes Polyethylen (CM) und Chlorsulfoniertes Polyethylen (CSM) und Epichlorhydrinkautschuk (ECO, CO, ETER) und Ethylen-Vinylacetat-Kautschuk (EVA) und Silikonkautschuk (MQ, VMQ, PVMQ, FVMQ) und fluorierter Methylsilikonkautschuk (MFQ) und perfluorinierter Propylen-Kautschuk (FFPM) und Perfluorcarbon-Kautschuk (FFKM) und Poyurethan (PU) und Polynorbenkautschuk (PNR) und Trans-Polyoctenamer-Kautschuk (TOR) und Polyester-Urethan-Kautschuk (AU) und Polyetherurethan-Kautschuk (EU).

Die genannten Kautschuke können hierbei alleine oder in Kombination eingesetzt werden. In einer besonders bevorzugten Ausführungsform handelt es sich bei dem Kautschuk der Schicht II um einen nichtfluorierten Kautschuk.

Besonders gut geeignet sind NBR, NBR/PVC, HNBR, EPDM, ECO, CM, CR, CSM, CIIR, BIIR und IIR.

Die Schicht II enthält erfindungsgemäß ein Haftvermittlersystem, welches aus DBU-Salz und / oder aus DBN-Salz besteht.

Bei dem DBU-Salz und dem DBN-Salz, welche erfindungsgemäß alleine oder in Kombination eingesetzt werden können, handelt es sich jeweils um eine Verbindung aus DBU bzw DBN und einer Monocarbonsäure oder einer dibasischen Säure. Monocarbonsäuren sind Säuren, die über eine Carboxylgruppe verfügen.

Bei der Monocarbonsäure kann es sich um eine acyclische aliphatische Monocarbonsäure oder um eine cyclische aliphatische Monocarbonsäure oder um eine aromatische Monocarbonsäure oder um eine heterocyclische Monocarbonsäure handeln. Sie können jeweils gesättigt oder ungesättigt sein.

Beispiele für gesättigte cyclische Monocarbonsäuren sind Cyclobutansäure oder Cyclohexancarbonsäure.

Bevorzugt handelt es sich allerdings um eine gesättigte acyclische Monocarbonsäure mit der Formel H(CH)ₘCOOH, wobei m hierbei Werte zwischen 0 und 40, bevorzugt zwischen 8 und 25, annehmen kann. Beispiele für solche gesättigten aliphatische Monocarbonsäuren sind Ameisensäure (m=0), Essigsäure (m=1), Propionsäure (m=2), Buttersäure (m=3), Valeriansäure (m=4), Capronsäure (m=5), Önanthsäure (m=6), Caprylsäure (m=7), Pelargonsäure (m=8), Caprinsäure (m=9), Undecansäure (m=10), Laurinsäure (m=11), Tridecansäure (m=12), Myristinsäure (m=13), Pentadecandisäure (m=14), Palmitinsäure (m=15), Margarinsäure (m=16), Stearinsäure (m=17), Nonadecansäure (m=18), Arachinsäure (m=19), Heneicosansäure (m=20), Behensäure (m=21), Lignocerinsäure (m=22), etc..

Dibasische Säuren sind Carbonsäuren, die über zwei Carboxylgruppen verfügen.

Bei der dibasischen Säure kann es sich um eine acyclische aliphatische dibasische Säure oder um eine cyclische aliphatische dibasische Säure oder um eine aromatische dibasische Säure oder um eine heterocyclische dibasische Säure handeln. Sie können jeweils gesättigt oder ungesättigt sein. Als aromatische dibasische Säuren können bspw. Phthalsäure, Terephthalsäure oder Isophthalsäure verwendet werden.

Bevorzugt handelt es sich allerdings um eine aliphatische dibasische Säure mit der Formel HOOC(CH)ₘCOOH, wobei m hierbei Werte zwischen 0 und 40, bevorzugt zwischen 6 und 22, besonders bevorzugt zwischen 6 und 12, annehmen kann. Beispiele für solche aliphatischen dibasische Säuren sind Oxalsäure (m=0), Malonsäure (m=1), Bernsteinsäure (m=2), Glutarsäure (m=3), Adipinsäure (m=4), Pimelinsäure (m=5), Suberinsäure (m=6), Azelainsäure (m=7), Sebacinsäure (m=8), Undecandisäure (m=9), Dodecandisäure (m=10), Brassylsäure (m=11), Tetradecandisäure (m=12), Thapsiasäure (m=14), Heptadecandisäure (m=15), Octadecandisäure (m=16), Nonadecandisäure (m=17) und Eicosandisäure (m=18).

Wie bereits erwähnt, besteht das Haftvermittlersystem aus wenigstens einem DBU-Salz und / oder aus wenigstens einem DBN-Salz. Besonders gute Haftergebnisse lassen sich erzielen, wenn ein Gemisch aus verschiedenen DBU-Salzen eingesetzt wird. Bevorzugt handelt es sich hierbei um ein Gemisch aus verschiedenen DBU-Salzen, die aus DBU und jeweils verschiedenen aliphatischen dibasischen Säuren, jeweils auf einem Träger erhalten wurde. Als dibasische Säuren für das Gemisch sind hierzu besonders Adipinsäure (m=4), Pimelinsäure (m=5), Suberinsäure (m=6), Azelainsäure (m=7), Sebacinsäure (m=8), Undecandisäure (m=9) und Dodecandisäure (m=10) in verschiedenen Kombinationen oder in der Kombination mit m=4, m=5, m=6, m=7, m=8, m=9 und m=10 gut geeignet.

Das DBU-Salz und das DBN-Salz sind jeweils auf einem Träger aufgebracht.

Bei diesem Träger handelt es sich bevorzugt um Kieselsäure, Zeolithe, Cyclodextrine, Superabsorber oder pulverförmige Polymere, z.B. PE oder PP-Pulver. Es können auch verschiedene Träger gleichzeitig verwendet werden.

Bevorzugt ist der Einsatz von Kieselsäure, da diese kostengünstig ist und einfach in unterschiedlichen Qualitäten und pH-Werten erhältlich ist.

Die Gesamtmenge an Haftvermittlersystem in der Schicht II beträgt bevorzugt zwischen 0,005 und 50 M%, besonders bevorzugt zwischen 0,025 und 40 M% und ganz besonders bevorzugt zwischen 0,25 und 10 M%.

Der Begriff "M%" bezieht sich hierbei auf eine Mengenangabe jeweils pro 100g Kautschukmischung.

Der ebenso verwendete Begriff "K%" bezieht sich auf eine Mengenangabe jeweils pro 100g Kautschuk und ist somit der Angabe "phr" (parts per hundred parts of rubber) gleichzusetzen.

In der Schicht II ist des Weiteren bevorzugt noch wenigstens ein Füllstoff vorhanden. Hierbei kann es sich um alle der fachkundigen Person bekannten Füllstoffe handeln, wie Ruß, Graphit, Kohlenstoffnanoröhren (CNT), Kieselsäure, Calcium- und Aluminiumsilikate, Kieselgur, Kaolin, Kalkstein, Zeolithe, Cyclodextrine, Feldspat und/oder Talkum Kreide, Tonerde-Gel, Fasern (Kurz- und Langfasern, Glas-, Kohle-, Aramidfasern), Whisker (Aluminiumoxid, Siliziumcarbid), Glimmer, Magnetit, Zinkoxid, Kern/Mantel-Füllstoffe, Asphalt, Hartgummistaub, Chloride, Carbonate, Sulfate, Oxide und Hydroxide von Alkali- und Erdalkalimetallen, Al(OH)₃, PVC, Polymerpulver (z.B. PE oder PTFE-Pulver), Faktis, anorganische und organische Pigmente, organische oder anorganische Säuren, Glaskugeln, Holzmehl, Nussschalenmehl, handeln, die jeweils alleine oder in Kombination verwendet werden können.

Damit die Schicht II eine gute elektrische Leitfähigkeit aufweist, hat sich besonders die Verwendung von leitfähigen Rußen, Graphit, CNT und Metallen und deren Verbindungen, insbesondere Eisenverbindungen, als bevorzugt erwiesen.

Die Gesamtmenge an Füllstoff beträgt bevorzugt 10 bis 300 phr, besonders bevorzugt 20 bis 100 phr. Die Gesamtmenge an Füllstoff beinhaltet nicht etwaige Reste des Trägers. Besonders gut geeignet sind basische Füllstoffe, da diese bei der Abstraktion des Fluoratoms von der Polymerkette hilfreich sind. Zusäzlich ist es hilfreich, wenn der Füllstoff noch eine verstärkende Wirkung hat. Daher sind Kaolin und Kreide, insbesondere aber Ruß und Kieselsäure besonders bevorzugt.

Des Weiteren enthält die Kautschukschicht II ein Vernetzungssystem enthaltend wenigstens einen Schwefel und / oder wenigstens einen Schwefelspender oder ein Vernetzungssystem enthaltend wenigstens ein Peroxid oder ein Vernetzungssystem enthaltend wenigstens ein polyvalentes Metalloxid oder ein Vernetzungssystem enthaltend wenigstens ein Diisocyanat oder ein Vernetzungssystem enthaltend wenigstens ein Harz, bspw. Phenol-Formaldehyd-Harz, Phenol-Alkyl-Formaldehydharz, oder ein Vernetzungssystem enthaltend wenigstens ein Dioxim oder ein Vernetzungssystem enthaltend wenigstens ein Bisphenol oder ein Vernetzungssystem enthaltend wenigstens ein multifunktionelles Silan.

Die Wahl des Vernetzungssystems hängt hierbei im Wesentlichen von den eingesetzten Kautschuken ab.

Besonders bevorzugt ist ein Vernetzungssystem enthaltend wenigstens ein Peroxid oder ein Vernetzungssystem enthaltend wenigstens einen Schwefelspender, bspw. eine Thiuramverbindung, oder ein Vernetzungssystem enthaltend wenigstens ein Harz.

Ein peroxidisches Vernetzungssystem erzeugt -O*-Radikale, welche besonders reaktiv sind und ggf. die Fluorabstraktion und die Ausbildung einer stabilen Atombindung unterstützen können. Zudem sind peroxidisch vernetzte Kautschuke besonders temperaturstabil.

Ein Vernetzungssystem mit Schwefelspender ergibt dynamisch flexiblere Endprodukte. Bei einer Harzvernetzung muss die Menge an DBU zu Harz und der pH-Wert gut abgestimmt werden. Vorteil der Harzvernetzung ist, dass kein Spaltprodukt (somit wenig Geruch) entsteht und dass das Harz vollständig zwischen die Polymerkette eingebaut wird.

Die Schicht II ist in einer besonders bevorzugten Ausführungsform frei von weiteren Zusatzstoffen, d.h. die Menge an weiteren Zusatzstoffen in der Schicht II beträgt 0 phr. In einer anderen bevorzugten Ausführungsform enthält die Schicht II noch weitere Zusatzstoffe. Diese weiteren Zusatzstoffe sind ausgewählt aus der Gruppe bestehend aus Verarbeitungshilfsmittel, wie bspw. Zinkoxid, Zinkstearat, Mg-Stearat, Stearinsäure, PE- und /oder PTFE-Pulver, und Weichmacher, wie z.B. Weißöle, Ester, Faktis undWachse, und Emulgatoren und Dispersionsmittel und Neutralisierungsmittel und Alterungsschutzmittel und organische Pigmente und anorganische Pigmente und Ozonschutzmittel und Flammschutzmittel und funktionelle Materialien, wie z.B. antibakterielle Zusätze, Geruchsneutralisationsmittel, Aromen, und Gleit- und Formtrennmittel und Schutzmitttel gegen Fäulnis und permeationshemmende Stoffe, wie bspw. Schichtsilikate, und Reste der Monocarbonsäure und Reste der dibasischen Säure und Reste des Trägers.

Die genannten Zusatzstoffe können jeweils alleine oder in Kombination eingesetzt werden.

In einer bevorzugten Ausführungsform kann der Schlauch nur aus der Schicht I als Innenschicht und der Schicht II als Außenschicht bestehen.

In einer weiteren besonders bevorzugten Ausführungsform kann zusätzlich wenigstens eine weitere Schicht aufgebaut aus wenigstens einen textilen Flächengebilde als Festigkeitsträgerschicht und / oder wenigstens eine weitere Schicht aufgebaut aus wenigstens einer Kautschukmischung enthalten sein.

Die Festigkeitsträgerschicht kann ein- oder mehrlagig ausgebildet sein. Auf diese Weise kann das zu transportierende Medium unter Druck stehen. Das textile Flächengebilde der Festigkeitsträgerschicht kann ein Gewebe, Gewirk, Geflecht oder Gestrick sein. Die diesbezüglichen Werkstoffe können ein Polyamid (PA), Polyimid (PI), ein Aramid, insbesondere para-Aramid oder meta-Aramid, ein Polyvinylacetal (PVA), ein Polyetheretherketon (PEEK), ein Polyester, insbesondere Polyethylentherephthalat (PET) oder Polyethylen-2,6-naphthalat (PEN), ein Polysulfon (PSU), ein Polyoxadiazol (POD), ein Polyphenylen oder Polyphenylenderivat, insbesondere ein Polyphenylensulfid (PPS), sein. Auch Hybridkonzepte, beispielsweise in Form eines Mischzwirns, können zum Einsatz gelangen.

Nicht erfindungsgemäß besteht der Schlauch aus drei Schichten, wobei Schicht I die mittlere Schicht zwischen zwei Elastomerschichten bildet, wobei eine der beiden Elastomerschichten in diesem Fall Schicht II darstellt.

Weiterhin ist es möglich, dass der erfindungsgemäße Schlauch Heizelemente enthält, wie sie bspw. in DE 10 2013 226 629 A1 oder in DE 10 2013 223 910 A1 beschrieben sind.

Erfindungsgemäß ist aufgrund der geringen Toxizitat der Einsatz als Trinkwasser- oder Lebensmittelschlauch.

## Patentansprüche

1. Mehrschichtiger flexibler Trinkwasserschlauch oder Lebensmittelschlauch, **dadurch gekennzeichnet, dass** er wenigstens eine Schicht I, aufgebaut aus wenigstens einem Fluorkunststoff, wobei der Fluorkunststoff kein Fluorelastomer ist, und wenigstens eine weitere Schicht II, aufgebaut aus wenigstens einem Kautschuk, enthält, welche in direktem Kontakt zueinander stehen und wobei die Schicht II ein Haftvermittlersystem enthält, welches aus wenigstens einem 1,8-Diaza-bicyclo[5.4.0]undec-7-en -Salz (DBU-Salz) und / oder wenigstens einem 1,5-Diaza-bicyclo[4.3.0]non-5-en-Salz (DBN-Salz) besteht, wobei das DBU-Salz aus DBU und einer Monocarbonsäure und / oder einer dibasischen Säure erhalten wurde und wobei das DBU-Salz auf einen Träger aufgebracht wurde, und wobei das DBN-Salz aus DBN und einer Monocarbonsäure und / oder einer dibasischen Säure erhalten wurde und wobei das DBN-Salz auf einen Träger aufgebracht wurde, und wobei die Schicht II ein Vernetzungssystem enthaltend wenigstens einen Schwefel und / oder wenigstens einen Schwefelspender oder ein Vernetzungssystem enthaltend wenigstens ein Peroxid oder ein Vernetzungssystem enthaltend wenigstens ein polyvalentes Metalloxid oder ein Vernetzungssystem enthaltend wenigstens ein Diisocyanat oder ein Vernetzungssystem enthaltend wenigstens ein Harz oder ein Vernetzungssystem enthaltend wenigstens ein Dioxim oder ein Vernetzungssystem enthaltend wenigstens ein Bisphenol oder ein Vernetzungssystem enthaltend wenigstens ein multifunktionelles Silan aufweist, wobei die Schicht I die Innenschicht des Schlauches bildet und somit in direktem Kontakt zu dem zu transportierenden Lebensmittel und Trinkwasser steht.

2. Mehrschichtiger flexibler Schlauch nach Anspruch 1, **dadurch gekennzeichnet, dass** der Kautschuk der Schicht II ausgewählt ist aus der Gruppe bestehend aus NR, IR, BR, SBR, SSBR, ESBR, NBR, NBR/PVC, CR, IIR, CIIR, BIIR, EPDM, EPM, ETER, PNR, TOR, ECO, CO, ETER, EVA, HNBR, CM, CSM, AU, EU, FKM, FFPM, FFKM, PU, MQ, VMQ, PVMQ, MFQ und FVMQ.

3. Mehrschichtiger flexibler Schlauch nach Anspruch 1 oder 2, **dadurch gekennzeichnet, dass** der Träger Kieselsäure ist.

4. Mehrschichtiger flexibler Schlauch nach einem der Ansprüche 1 bis 3, **dadurch gekennzeichnet, dass** die Gesamtmenge des Haftvermittlersystems in der Schicht II 0,005 bis 50 M% beträgt.

5. Mehrschichtiger flexibler Schlauch nach einem der Ansprüche 1 bis 4, **dadurch gekennzeichnet, dass** er aus zwei Schichten besteht.

## Claims

1. Multilayer flexible potable water hose or a foodstuffs hose, **characterized in that** it contains at least one layer I constructed from at least one fluororubber, wherein the fluororubber is not a fluoroelastomer, and at least one further layer II constructed from at least one rubber which are in direct contact with one another and wherein the layer II contains an adhesion promoter system consisting of at least one 1,8-diazabicyclo[5.4.0]undec-7-ene salt (DBU salt) and/or at least one 1,5-diazabicyclo[4.3.0]non-5-ene salt (DBN salt), wherein the DBU salt has been obtained from DBU and a monocarboxylic acid and/or a dibasic acid and wherein the DBU salt has been applied to a carrier and wherein the DBN salt has been obtained from DBN and a monocarboxylic acid and/or a dibasic acid and wherein the DBN salt has been applied to a carrier and wherein the layer II contains a crosslinking system containing at least one sulfur and/or at least one sulfur donor or a crosslinking system containing at least one peroxide or a crosslinking system containing at least one polyvalent metal oxide or a crosslinking system containing at least one diisocyanate or a crosslinking system containing at least one resin or a crosslinking system containing at least one dioxime or a crosslinking system containing at least one bisphenol or a crosslinking system containing at least one multifunctional silane, wherein the layer I forms the inner layer of the hose and is therefore in direct contact with the foodstuff and potable water being transported.

2. Multilayer flexible hose according to Claim 1, **characterized in that** the rubber of layer II is selected from the group consisting of NR, IR, BR, SBR, SSBR, ESBR, NBR, NBR/PVC, CR, IIR, CIIR, BIIR, EPDM, EPM, ETER, PNR, TOR, ECO, CO, ETER, EVA, HNBR, CM, CSM, AU, EU, FKM, FFPM, FFKM, PU, MQ, VMQ, PVMQ, MFQ and FVMQ.

3. Multilayer flexible hose according to Claim 1 or 2, **characterized in that** the carrier is silica.

4. Multilayer flexible hose according to any of Claims 1 to 3, **characterized in that** the total amount of the adhesion promoter system in the layer II is 0.005 to 50 M%.

5. Multilayer flexible hose according to any of Claims 1 to 4, **characterized in that** it is composed of two layers.

## Revendications

1. Tuyau flexible multicouche pour eau potable ou produit alimentaire, **caractérisé en ce qu'**il contient au moins une couche I, construite à partir d'au moins une matière plastique fluorée, la matière plastique fluorée n'étant pas un fluoroélastomère, et au moins une autre couche II, construite à partir d'au moins un caoutchouc, qui sont en contact direct l'une avec l'autre et la couche II contenant un système de promoteur d'adhérence qui est constitué d'au moins un sel de 1,8-diazabicyclo[5.4.0]undéc-7-ène (sel de DBU) et/ou d'au moins un sel de 1,5-diazabicyclo[4.3.0]non-5-ène (sel de DBN), le sel de DBU ayant été obtenu à partir de DBU et d'un acide monocarboxylique et/ou d'un acide dibasique et le sel de DBU ayant été déposé sur un support, et le sel de DBN ayant été obtenu à partir de DBN et d'un acide monocarboxylique et/ou d'un acide dibasique et le sel de DBN ayant été déposé sur un support, et la couche II présentant un système de réticulation contenant au moins un soufre et/ou au moins un donneur de soufre ou un système de réticulation contenant au moins un peroxyde ou un système de réticulation contenant au moins un oxyde métallique polyvalent ou un système de réticulation contenant au moins un diisocyanate ou un système de réticulation contenant au moins une résine ou un système de réticulation contenant au moins un dioxime ou un système de réticulation contenant au moins un bisphénol ou un système de réticulation contenant au moins un silane multifonctionnel, la couche I formant la couche intérieure du tuyau et étant ainsi en contact direct avec le produit alimentaire ou l'eau potable à transporter.

2. Tuyau flexible multicouche selon la revendication 1, **caractérisé en ce que** le caoutchouc de la couche II est choisi dans le groupe constitué par NR, IR, BR, SBR, SSBR, ESBR, NBR, NBR/PVC, CR, IIR, CIIR, BIIR, EPDM, EPM, ETER, PNR, TOR, ECO, CO, ETER, EVA, HNBR, CM, CSM, AU, EU, FKM, FFPM, FFKM, PU, MQ, VMQ, PVMQ, MFQ et FVMQ.

3. Tuyau flexible multicouche selon la revendication 1 ou 2, **caractérisé en ce que** le support est l'acide silicique.

4. Tuyau flexible multicouche selon l'une quelconque des revendications 1 à 3, **caractérisé en ce que** la quantité totale du système de promoteur d'adhérence dans la couche II est de 0,005 à 50 % en masse.

5. Tuyau flexible multicouche selon l'une quelconque des revendications 1 à 4, **caractérisé en ce qu'**il est constitué de deux couches.
